# EUROPEAN PATENT APPLICATION

(11) **EP 1 231 667 A1**
(43) Date of publication of application: **14.08.2002**
(21) Application number: 00962545.0
(22) Date of filing: 13.09.2000
(51) Int. Cl.: H01M 10/44, H02J 7/02

(54) **BUTTON-TYPE BATTERY CHARGER**

(30) Priority: 13.09.1999 ES 9902083
(71) Applicant: Planells Almerich, Francisco, Torrente, 46900 Valencia (ES)
(72) Inventor: Planells Almerich, Francisco, Torrente, 46900 Valencia (ES)
(74) Representative: Sanz-Bermell Martinez, Alejandro
(86) International application number: ES0000342
(87) International publication number: WO0120706

(57) **Abstract**

This includes a recharging circuit which has supply terminals (1), normally for alternating current, a voltage-reducing circuit formed of a resistance (10) or a transformer (11), charging terminals (2) and an overload-prevention circuit (4) consisting of at least one diode (5). It includes a charging box which houses said circuit and its connection to an electrical mains socket, and to charging terminals with at least one sliding moving item (33) which supports the button battery (36) on a slot (30).

For industrial application in the manufacture of electrical accumulator chargers.

## Description

The technical field involved in this patent is the manufacture of chargers for electrical accumulators.

There is a wide range of well-known standard batteries fitted with an alternating to direct current rectifier by means of a diode bridge and a circuit in parallel to the one for charging the accumulators, generally batteries, which has a Zener diode as a means for stabilising the current between the two charging terminals.

However, these devices are not capable of recharging non-rechargeable button-type batteries, which means that the latter have to be disposed of.

One of the most serious problems involved with the use of button batteries is their great contaminating power, which requires great efforts by users and public authorities for recycling their components.

It is obvious that one highly effective solution for reducing this effort is that of regenerating the use of the battery by recharging this, for example for watches, calculators and other electronic items, meaning that the used battery does not have to be thrown away, or only after a much longer period of time than at present.

Button batteries are generally not rechargeable, which means that the devices used to recharge any other type of accumulators are not effective with button batteries.

Nevertheless, the inventor of this invention has carried out a great deal of tests that have led to achieving a practically full recharge of the formerly single-use button batteries with the circuit covered by this invention. A box has also been designed to enable easy and convenient use of the charger during the charging process and allowing button batteries to be easily charged.

The subject of this invention is a button battery charger which solves the problem previously described, by using a circuit and a box containing this circuit and carrying a battery in its charging phase.

In order to make the following explanation clearer, two sheets of drawings are enclosed which represent the essence of this invention in five figures.

Figure 1 shows a schematic view of a circuit with input terminals, output (charging) terminals, a rectifier circuit and a circuit for preventing overloads, in which the mains voltage is reduced by means of a resistance.

Figure 2 shows an alternative embodiment to the one in Figure 1, in which the reduction of mains voltage is performed by means of a transformer.

Figure 3 shows a alternative circuit to the one in Figure 1, in which the circuit for preventing overloads consists of three diodes in series.

Figure 4 shows an alternative circuit, from which a LED for indicating operation has been removed.

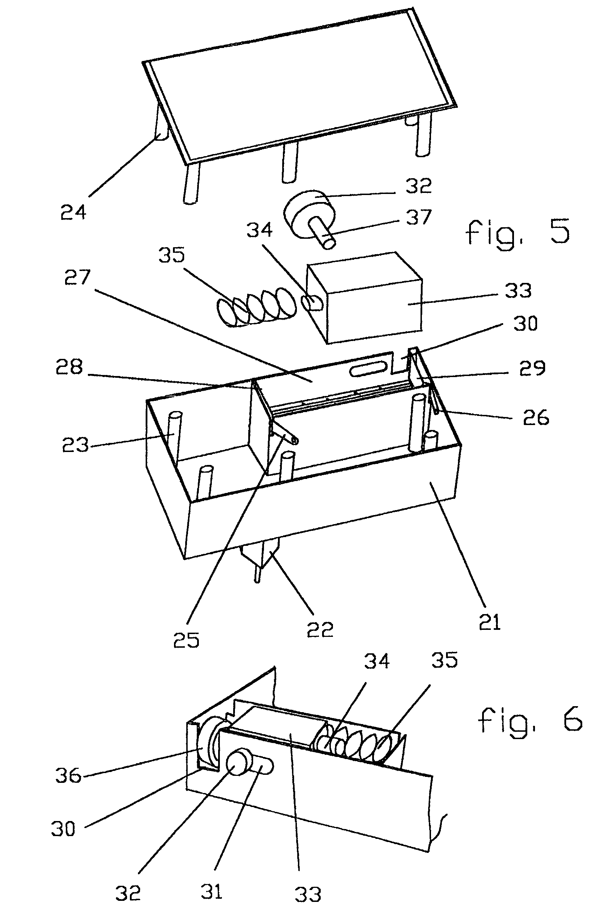

Figure 5 shows an exploded view of the charging box, carrying the circuit and the button battery in the charging process.

Figure 6 shows a detailed view of the device for securing the battery for charging this.

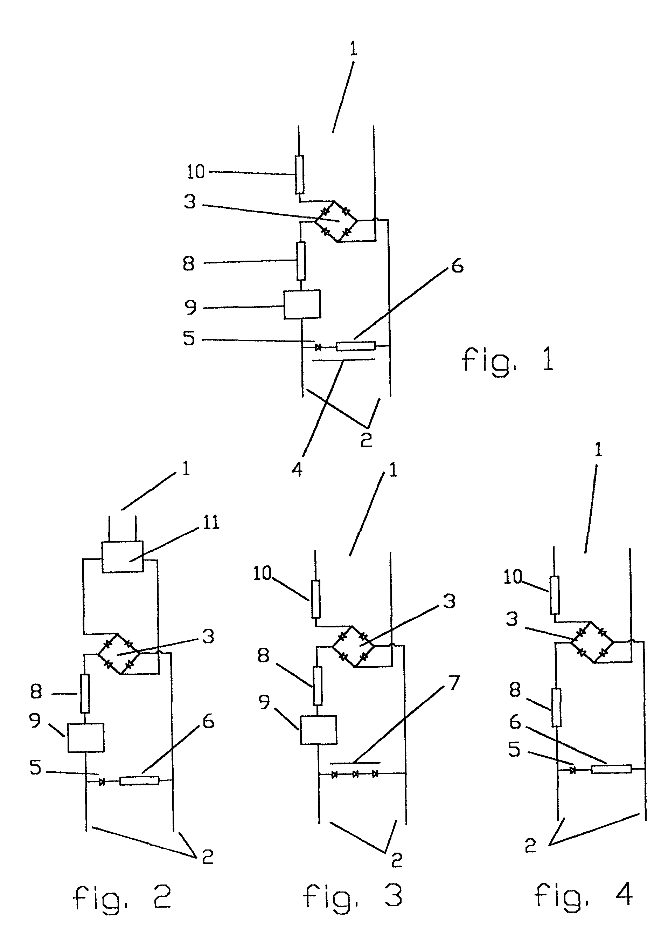

In these figures 1 indicates the circuit supply terminals, normally connected to the alternating current electric distribution mains, 2 being the charging terminals, 3 a rectifier circuit, 4 an overload prevention circuit, 5 a diode used in the circuit for preventing overloads, 6 being a resistance in the circuit for preventing overloads, 7 a set of diodes in series fitted in the overload prevention circuit, 8 being a series resistance with the charge terminals, 9 a LED indicating operation, 10 a voltage-reducing resistance, 11 a transformer for reducing voltage, 21 a box carrying a circuit for recharging a button battery and a device for holding this battery, 22 a plug for connection to a socket, 23 and 24 being ribs for securing the box and the cover, 25 the connection terminal between one of the output terminals of the circuit and one of the box's charging terminals, 26 being the connection terminal between the other output terminals from the charging circuit and the other of the box's charging terminals, 27 being the housing of a sliding item for holding the battery, 28 being the contact between one of the terminals and the sliding item, 29 being the contact for charging the other of the terminals, 30 a slot for inserting the battery, 31 a slot which allows the sliding item to be slid along by manual pressure, 32 a button for working said sliding item, 33 the sliding item, 34 a guide-rib of a spring-contact with corresponding contact 28, 35 being the spring-contact, 36 the battery, and 37 the element for joining the sliding item and the operating button.

Explanation of the forms of embodiment.

As has been explained above, a circuit with the following items is set up:
a supply circuit 1, normally for alternating current, and generally from the electrical distribution mains;
a voltage reduction circuit, which can either be formed of a resistance 10, or a transformer 11;
a full-wave rectification circuit, which transforms the alternating current into direct current, consisting of a diode bridge 3;
a circuit for adjusting the output voltage which will have, where applicable, a resistance 8;
optionally a device for displaying the status (operating/not operating) consisting of a LED 9, series connected in the circuit for adjusting the output voltage;
a circuit 4 for preventing overloads of the battery, set in parallel with the charging circuit, which has at least one diode 5, and preferably also consisting of a resistance element 6 or a set of diodes in series 7;
optionally a device for verifying the charge, consisting of a LED located in series with one of the charge terminals 2.

The electrical properties of the material mean that the current has to be opposed to the natural output current of the battery. For this purpose a circuit has been designed which maintains the voltage in the charge terminals at the desired levels, until this diminishes through opposition of what is generated by the battery itself to levels lower than the preset ones. In the event of the battery 36 being discharged, its resistance will be low and allow current through, with the voltage between the charging terminals thus being low. As the battery 36 is charged, this will generate a higher resistance and oppose its own charge to the charge that it receives, so that the voltage between charging terminals 2 will increase, reducing the current getting through, and one part of the current will run through the overload prevention circuit 4, after certain voltage levels are exceeded.

Use is made of the diodes' electrical characteristics, preventing the circulation of current at low voltage levels, and conducting as soon as said levels have been exceeded.

Obviously, changing the order of the items without altering their structure and essential purpose (diode-resistance / resistance-diode, or LED resistance/resistance/LED) all comes within the scope of this invention, as well as removing any items which would be unnecessary in different operating conditions (direct current supply, or at a particular voltage).

Charging the battery is done by placing this in a support or box 21, which houses the circuit and is connected to the items for connecting and securing the button battery.

This box 21 contains a plug 22 or means for connection to the electrical mains, a number of elements 23 and 24 for joining this to the cover and a device for securing the battery 36 for charging this.

The box 21 has terminals 25 and 26 for connection with the charge terminals 2 of the circuit, linked to charge - 29 - or coupling - 28 - contacts to moving items 33 which cover these contacts.

The box has a slot 30 for inserting the button battery in its charging position. Said slot 30 allows the battery to be located in a cavity which has a sliding item 33 with a spring 35 which has the dual function of pressing against the battery and maintaining electrical conduction with the contact 28. This sliding item 33 is located on a longitudinal housing fitted for this purpose.

To allow manual movement of the sliding item 33 for placing and removing the button battery, a slot 31 has been fitted in the box 21, which enables an operating button 31 to be linked by means of its extension 37 with the sliding item 33, on which it will be secured, normally by threaded means.

Any variation of a formal nature which does not alter the essential structure of what is described herein must be understood as being included in the scope of this invention.

The invention is for use in industrial applications in manufacturing electrical accumulator chargers.

## Claims

1. Charger for button-type batteries, which consists of an electrical circuit and a support for holding the button battery during the charging process, the electrical circuit consisting of
- electrical supply terminals (1)
- a charging sub-circuit which has charging terminals (2)
- an overload-prevention sub-circuit (4) and is **characterised by**:
a) the overload prevention circuit (4) being connected in parallel with the charging circuit;
b) the overload prevention circuit consisting of at least one diode (5),
c) the support being formed by a box (21) which contains the circuit inside this;
d) the support for securing the battery button during the charging process having a housing (30) for the button battery (36) with a pre-set position;
e) the support having at least a first moving item (33) inseparably connected to one of the terminals of the charging circuit (2);
f) the support having at least a second item inseparably connected to another of the terminals (2) of the charging circuit;
g) the moving item (33) tending to maintain the button battery secured and connected to the circuit during the charging process.

2. Charger for button-type batteries, according to claim 1, **characterised in that** the circuit also includes terminals for supplying alternating or direct current and a voltage reducer.

3. Charger for button-type batteries, according to claim 2, **characterised in that** the voltage reducer is a transformer (11).

4. Charger for button-type batteries, according to claim 2, **characterised in that** the voltage reducer consists of a resistance (10).

5. Charger for button-type batteries, according to claim 1, **characterised in that** the circuit includes a rectifier (3) for alternating to direct current.

6. Charger for button-type batteries, according to claim 1, **characterised in that** a voltage-reducing circuit consisting of a resistance (8) is fitted series-connected with the charging circuit.

7. Charger for button-type batteries, according to claim 1, **characterised in that** an operating indicator consisting of a LED (9) is fitted series-connected with the charging circuit.

8. Charger for button-type batteries, according to claim 1, **characterised in that** a LED for indicating the charging status is series-connected with the charge terminals.

9. Charger for button-type batteries, according to claim 1, **characterised in that** the overload prevention circuit consists of at least one diode (5).

10. Charger for button-type batteries, according to claim 9, **characterised in that** the overload prevention device consists of a set of diodes (7), series connected.

11. Charger for button-type batteries, according to claim 9, **characterised in that** the overload prevention device consists of at least one diode and a resistance, series-connected.

12. Charger for button-type batteries, according to claim 9, **characterised in that** the housing of the button battery 36 for charging this is made by means of a recess 30 in the box 21 which forms the support.

13. Charger for button-type batteries, according to claim 9, **characterised in that** the two charge contacts are joined to moving items.

14. Charger for button-type batteries, according to claim 9, **characterised in that** one of the contacts is formed of a fixed terminal (29).

15. Charger for button-type batteries, according to any of the previous claims, **characterised in that** the battery is secured and connected in its charging position against the resilience of a spring (35).
